Europäisches Patentamt

European Patent Office

Office européen des brevets

(11) Numéro de publication: **0 416 976 A1**

# DEMANDE DE BREVET EUROPEEN

(21) Numéro de dépôt: 90402362.9

(51) Int. Cl.⁵: **G01N 1/24**

(22) Date de dépôt: **24.08.90**

(30) Priorité: **05.09.89 FR 8911603**

(43) Date de publication de la demande:
**13.03.91 Bulletin 91/11**

(84) Etats contractants désignés:
**AT BE CH DE DK ES GB GR IT LI LU NL SE**

(71) Demandeur: **TECHMETAL PROMOTION**
**Domaine de l'Irsid Voie Romaine**
**F-57210 Maizieres-Lès-Metz(FR)**

(72) Inventeur: **Sowa, Lucien**
**11, Rue de la Doliche**
**F-57000 Metz(FR)**

(74) Mandataire: **Martin, Jean-Paul et al**
**c/o CABINET LAVOIX 2, Place d'Estienne**
**d'Orves**
**F-75441 Paris Cedex 09(FR)**

(54) **Procédé et dispositif pour mesurer la concentration dans l'atmosphère de poussières en suspension entraînées par le vent à partir de tas de matériaux pulvérulents.**

(57) Ce dispositif comprend une chaîne de prélèvement équipée d'un moyen de mesure (1) de la vitesse (v) du vent, d'un capteur (2) d'un volume échantillon de l'air disposé au voisinage immédiat du moyen de mesure de la vitesse du vent, une unité d'aspiration (5) reliée au capteur (2) et pourvue de moyens (9, 12) d'asservissement du débit de captation à la vitesse du vent mesurée par ledit moyen de mesure (1), le capteur (2) comportant un organe de prélèvement (3) de l'air et un filtre (4) permettant de filtrer et de stocker les poussières du volume échantillon d'air prélevé.

FIG.1

EP 0 416 976 A1

La présente invention a pour objet un procédé et un dispositif pour mesurer la concentration dans l'atmosphère de poussières en suspension, entraînées par le vent à partir d'aires de stockage de tas de matériaux pulvérulents.

On sait que les réenvols de poussières de tas de matériaux pulvérulents tels que du charbon ou du minerai entrainent, non seulement une pollution importante de l'environnement, mais aussi des pertes considérables et par conséquent très onéreuses, des matériaux en cause.

Pour limiter les réenvols des poussières sous l'effet du vent, on a proposé d'arroser d'eau les tas de matériaux pulvérulents. Malheureusement, lorsque le vent souffle, il est pratiquement impossible d'arroser efficacement, et c'est précisément à ce moment que les matériaux desséchés s'envolent en quantités impressionnantes, de sorte que cette méthode s'est révélée pratiquement inefficace.

En fait, afin de déterminer de quelle manière il serait possible de limiter considérablement les réenvols de poussières, il est nécessaire de pouvoir évaluer avec une précision suffisante les quantités de matières perdues sous l'action du vent.

On a déjà proposé à cet effet diverses techniques de mesures, qui cependant se sont révélées trop complexes vis-à-vis des objectifs à atteindre, à savoir essentiellement, chiffrer le facteur d'émission des tas pour différentes conditions météorologiques et différentes conditions d'arrosage.

Par exemple, le document US-A-4159635, décrit un système de prélèvement d'échantillon d'air. Ce système comporte une unité d'aspiration et plusieurs capteurs de sections d'entrée différentes, utilisés alternativement en fonction de la vitesse du vent, en vue de faire des prélèvements sensiblement isocinétiques.

Un tel système ne permet pas de prélèvements réellement isocinétiques du fait que la section d'entrée des capteurs ne peut être précisément adaptée quelque soit la vitesse du vent. De plus les poussiéres collectées au cours d'un prélèvement peuvent se retrouver dispersées dans de nombreux capteurs si la vitesse du vent a quelque peu varié pendant ce prélèvement.

L'invention a pour but de résoudre ces différents problèmes et de permettre de réaliser simplement des prélèvements isocinétiques.

Avec ces objectifs en vue, l'invention a pour objet un procédé pour mesurer la concentration dans l'atmosphère de poussières en suspension entraînées par le vent à partir d'aires de stockage de tas de matériaux pulvérulents, selon lequel, dans un plan sensiblement perpendiculaire au vent dominant et à une distance et une altitude appropriées par rapport au tas de matériau pulvérulent, on mesure la vitesse du vent, on effectue un prélèvement isocinétique d'un volume d'échantillon de l'air au moyen d'un capteur d'une unité d'aspiration et on recueille les poussières prélevées sur des moyens de filtrage et de stockage du capteur, ce procédé étant caractérisé en ce que, on utilise un seul capteur et pour que le prélèvement soit isocinétique pendant toute sa durée, indépendamment des variations de vitesse du vent, on asservit le débit d'aspiration de l'unité d'aspiration à la vitesse mesurée du vent.

De préférence, on effectue la mesure de la concentration de poussières à plusieurs altitudes différentes, par exemple à 5 métres, 10 mètres et 15 mètres en fonction de la hauteur du tas de matériau.

Le dispositif pour la mise en oeuvre du procédé conforme à l'invention comprend une chaîne de prélèvement équipée d'un moyen de mesure de la vitesse du vent, de moyens de captage d'un volume échantillon de l'air disposés au voisinage immédiat du moyen de mesure de la vitesse du vent, d'une unité d'aspiration reliée aux moyens de captage, les moyens de captage comportant un organe de prélèvement de l'air et un filtre permettant de filtrer et de stocker les poussières du volume échantillon d'air prélevé, et il est caractérisé en ce que l'unité d'aspiration est pourvue de moyens d'asservissement du débit de captation à la vitesse du vent mesurée par ledit moyen de mesure.

Suivant une caractéristique préférentielle de l'invention, le dispositif comprend un mat de longueur variable et réglable, pourvu d'au moins une chaîne de prélèvement, par exemple de trois, pouvant être positionnées à des hauteurs différentes.

Le mât peut être télescopique et forme avec ses chaînes de prélèvement un équipage mobile monté sur un chariot.

Le filtre comporte un maillage adapté à la granulométrie des poussières, dont la pesée à la fin d'un prélèvement permet de mesurer la concentration desdites poussières dans l'atmosphère.

Le balayage d'un plan d'échantillonnage est réalisé par déplacement du mat d'un bord du tas à l'autre, par bonds successifs, par exemple de 5 mètres. Une campagne peut ainsi permettre d'obtenir les concentrations en poussières dans une fenêtre de, par exemple, 20m x 15m.

Après détermination de la concentration des réenvols de poussières, on procède à un arrosage des tas par un produit approprié, susceptible de former une croute ou un film sur la surface du tas. On pourra ultérieurement procéder à une nouvelle mesure de la concentration des poussières réenvolées afin de déterminer l'efficacité de l'arrosage.

L'invention sera maintenant décrite en référence aux dessins annexés qui en illustrent une forme de réalisation à titre d'exemple non limitatif.

La figure 1 est une vue schématique fonctionnelle d'une chaîne de prélèvement d'échantillons de poussières dans l'atmosphère conforme à l'invention.

La figure 2 est une vue en élévation simplifiée d'un chariot portant un équipage mobile comprenant plusieurs chaînes de prélèvement et de mesure selon l'invention.

La figure 3 est une vue en perspective partielle à échelle agrandie par rapport à la Fig.2, d'un ensemble capteur de poussières et de son support, pouvant être monté sur le mat télescopique du chariot de la Fig.2.

La figure 4 est une vue schématique de dessus d'un tas de matériau pulvérulent et des points de prélèvement pour mesurer la concentration des réenvols de poussières à partir de ce tas, compte tenu de la direction du vent.

Les figures 5a et 6a sont des exemples numériques de cartographie des concentrations en poussières respectivement dans le plan de mesure et des flux de poussières traversant la fenêtre balayée dans ce plan de mesure, pour une vitesse moyenne du vent donnée.

Les Figures 5b et 6b sont des cartographies similaires à celles des Fig.5a et 6a pour une vitesse moyenne du vent différente.

La figure 7 est un diagramme résultant des Fig.5a à 6b, illustrant la quantification des réenvols de tas de matériau pulvérulent avant et après arrosage de ces derniers.

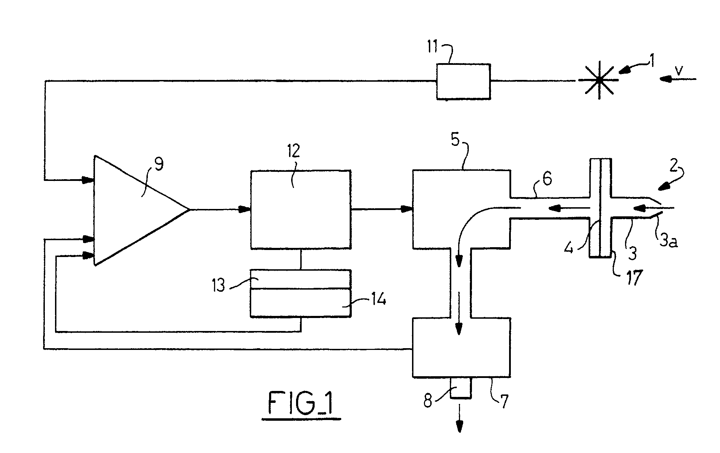

La chaîne de prélèvement schématiquement représentée à la Fig.1 comprend un moyen de mesure de la vitesse du vent, constitué par exemple par un anémomètre 1, la direction du vent étant indiquée par la flèche v, et un moyen capteur 2 d'un volume échantillon de l'air chargé de poussières en suspension, disposé au voisinage immédiat de l'anémomètre 1. Le capteur 2 comprend une buse 3 pourvue d'un bec 3a d'entrée d'air qui débouche sur un filtre séparateur 4, permettant de filtrer et de stocker les poussières du volume échantillon prélevé. Le filtre 4 comporte un maillage adapté à la granulométrie des poussières.

La chaîne de prélèvement comprend ensuite une unité d'aspiration 5 constituée par une pompe appropriée, qui communique avec la canalisation de sortie 6 du capteur 2 ainsi qu'avec un débitmètre 7 constitué par exemple d'une turbine, qui débouche sur une tubulure 8 de sortie d'air.

La chaîne comprend par ailleurs des moyens d'asservissement du débit de captation dans le capteur 2 à la vitesse du vent mesurée par l'anémomètre Dans l'exemple décrit, cet asservissement comprend un comparateur 9 relié, d'une part à l'anémomètre I avec interposition d'un convertisseur 11 qui convertit en une information électrique la vitesse du vent mesurée par l'anémomètre 1, et d'autre part au débitmètre 8. Ce dernier comprend également un organe convertissant la mesure du débit de la pompe 5 en une information électrique transmise au comparateur 9.

Un variateur 12 est relié d'une part au comparateur 9 et à la pompe 5, sur laquelle il agit en fonction des ordres qui lui sont transmis par le comparateur 9. Enfin, un organe de présélection 13 et un totalisateur 14 sont interposés entre le variateur 12 et le comparateur 9 : l'organe de présélection est réglé sur un volume d'air prédéterminé à échantillonner dans le capteur 2, par exemple 30m$^3$. Le totalisateur totalise le débit aspiré par la pompe 5. Lorsque ce débit total est égal à la valeur stockée dans l'organe de présélection 13, ce dernier émet un signal commandant l'arrêt automatique de l'ensemble de la chaîne.

Le filtre 4 est monté de manière amovible dans le capteur 2, afin de pouvoir être pesé après le prélèvement.

Le fonctionnement de la chaîne de prélèvement qui vient d'être décrite est le suivant.

L'air chargée de poussières en suspension entre dans le capteur 2, par son organe de prélèvement constitué par le bec 3a de la buse 3. Il traverse le filtre 4 en déposant sur celui-ci les poussières dont la granulométrie est supérieure à celle du maillage constitutif du filtre, puis entre par la conduite 6 dans la pompe 5 qui le refoule dans le débitmètre 7 jusqu'à la sortie 8. L'anémomètre 1 fournit au comparateur 9 la consigne constituée par la vitesse v du vent, tandis que le débitmètre 7 transmet au comparateur 9 le signal électrique correspondant au débit d'air aspiré dans la pompe 5.

Le comparateur 9 recueille les signaux électriques du convertisseur 11 et du débitmètre 7, les compare et donne au variateur 12 l'ordre de régler le débit de la pompe 5 sur la vitesse du vent transmise par le convertisseur 11. La pompe 5 est choisie de manière à pouvoir répondre très rapidement aux variations de débit imposées par le variateur 12, et exécute l'ordre d'asservissement de ce dernier pour égaliser la vitesse de captation de l'air dans le capteur 2 avec la vitesse du vent enregistrée par l'anémomètre 1. Lorsque le volume d'air entrant dans le capteur 2, enregistré par le totalisateur 14 atteint le volume d'échantillonnage mis en mémoire dans l'organe de présélection 13, ce dernier arrête automatiquement la chaîne.

Le filtre 4 peut alors être extrait du capteur 2 pour pesée et quantification de la concentration des poussières dans l'échantillon analysé.

L'asservissement de l'unité d'aspiration 5, 2 à la vitesse du vent mesurée par l'anémomètre 1 permet d'exécuter un prélèvement isocinétique, c'est-à-dire tel que la vitesse de prélèvement de l'échantillon, ou vitesse d'aspiration, soit équivalente à la vitesse du vent. Un prélèvement isocinétique présente des avantages importants par rapport à un prélèvement non isocinétique. En effet, lorsque la vitesse d'aspiration dans le capteur ou la sonde est supérieure à la vitesse dans la veine gazeuse, il se produit un rétrecissement dans la section gazeuse intéressée par le prélèvement, et les particules plus grosses et donc plus lourdes, situées à la périphérie, passent, par suite de leur inertie, à l'extérieur du bec de la sonde. Il en résulte un appauvrissement en ces particules dans l'échantillon prélevé, et donc une sous-estimation de la mesure pondérale des poussières.

Inversement, lorsque la vitesse d'aspiration est inférieure à celle du gaz dans la veine gazeuse, la section de la veine gazeuse intéressée par le prélèvement s'élargit, et on capte davantage de particules lourdes. Il s'ensuit un enrichissement de l'échantillon en grosses particules, et donc une surestimation de la mesure.

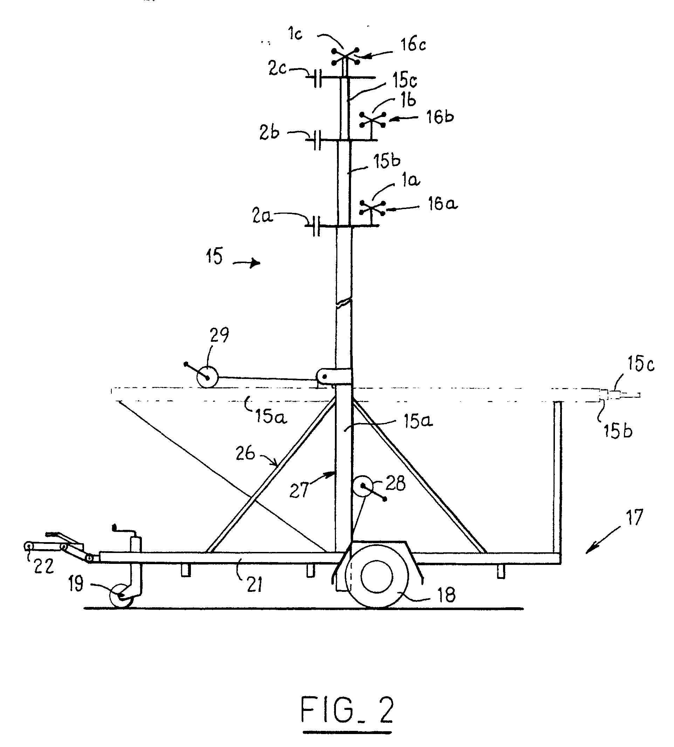

On a représenté à la Fig.2 une forme de réalisation d'un chariot 17 portant un mat télescopique 15 sur lequel sont montées plusieurs chaînes de prélèvement 16a, 16b, 16c, telles que celles de la Fig.1.

Le chariot 17 comporte un chassis 21 monté sur des roues 18, 19 et pourvu d'un attelage 22 à un tracteur non représenté. Il porte une structure 26 sur un montant central 27 de laquelle est articulé, autour d'un axe horizontal, un mat télescopique 15 à trois tronçons 15a, 15b, 15c. Un treuil de levage 28 permet de faire basculer le mat 15 pour le mettre en position verticale ou horizontale, et un treuil 29 monté sur le tronçon 15a permet l'érection successive des tronçons 15b et 15c.

Chaque chaîne de prélèvement 16a, 16b, 16c peut être fixée, de manière amovible, à l'extrémité du tronçon correspondant 15a, 15b, 15c, par exemple au moyen d'une cornière non représentée.

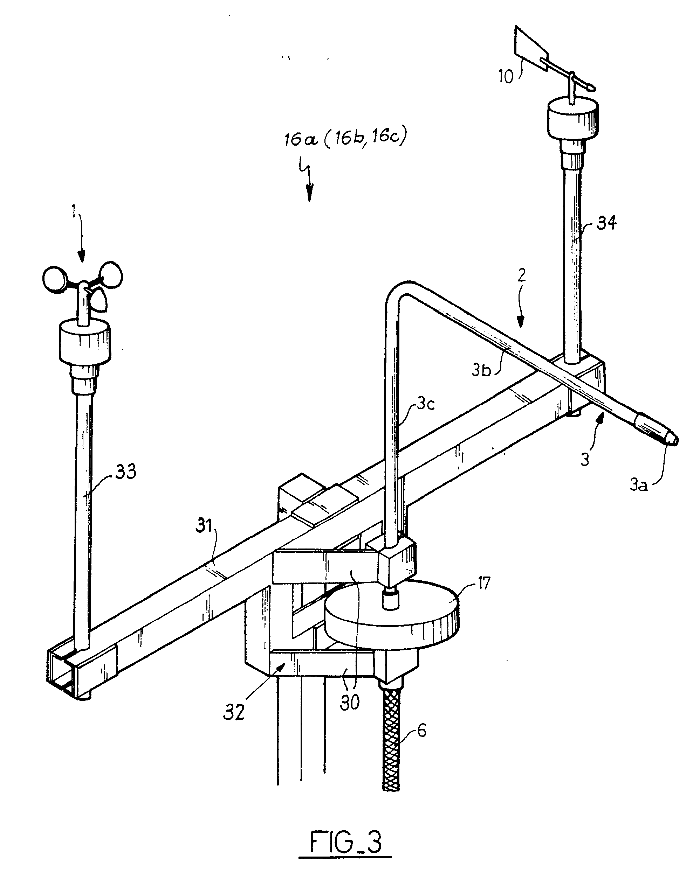

Chaque chaîne de prélèvement 16a, 16b, 16c peut être réalisée par exemple comme représenté à la Fig.3.

Ainsi la chaîne est partiellement montée sur une poutre horizontale 31 fixée à l'extrémité du tronçon 15a, 15b ou 15c de façon connue en soi, de manière amovible. A la zone centrale de la poutre 31 est assujettie une structure 32 à entretoises 30 entre lesquelles est placé un porte-filtre 17 contenant le filtre 4. La structure 32 supporte le capteur 2, dont la buse 3 est constituée d'une tubulure d'entrée horizontale 3b et d'une tubulure verticale 3c. La conduite 6 s'étend au-dessous du porte-filtre 17, tandis que l'anémomètre 1 et une girouette 10 sont fixés au sommet de colonnes 33, 34 placées aux extrémités de la poutre 31.

La pompe 5 et le débitmètre 7 sont disposés sur le chassis 21, et les trois chaînes de prélèvement 16a, 16b, 16c sont entièrement indépendantes l'une de l'autre. Le système d'asservissement (9, 12, 13, 14) et de commande se trouve par contre placé à l'abri dans un local fixe non représenté sur les figures. Le chariot 17 est orienté manuellement pour placer les becs 3a d'entrée d'air face au vent, en fonction de l'orientation de la girouette 10.

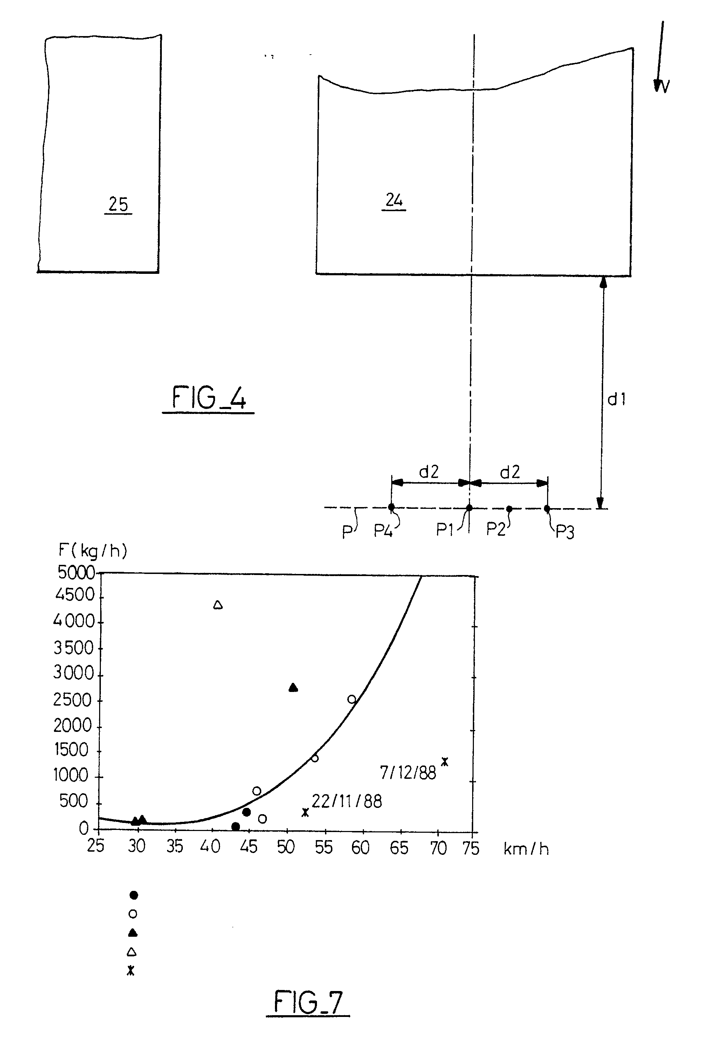

On a représenté schématiquement à la Fig.4 deux tas de matériaux pulvérulents 24, 25, par exemple de charbon, la direction V du vent, le plan de prélèvement P choisi, un point central P1 de prélèvement et des points supplémentaires de prélèvement P2, P3, P4 de part et d'autre du point central P1. A titre d'exemple numérique non limitatif, et en fonction de la hauteur et de la largeur du tas 24, le plan P peut être situé à une distance dl de 30 mètres du tas 24, et les points extremes P3 et P4 peuvent être situés à des distances d2 de 10 mètres de part et d'autre du point central P1. Enfin, le vent souffle dans une direction V à peu près parallèle à l'axe du tas 24 et sensiblement perpendiculaire au plan de prélèvement P.

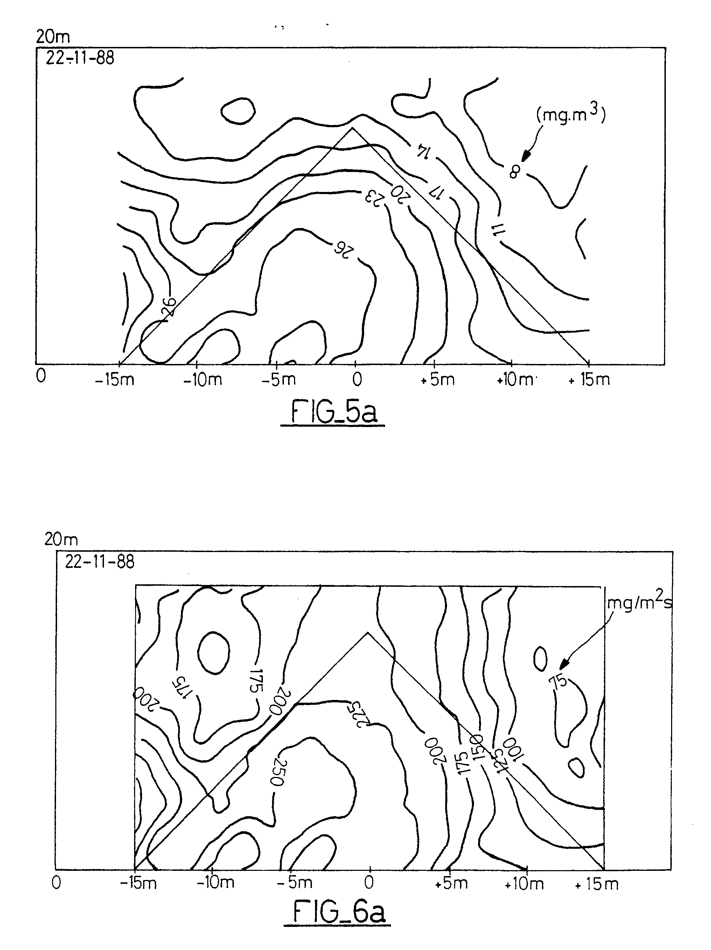

Les Fig.5a à 6d donnent des exemples numériques de deux campagnes de mesure de concentrations de poussières pour des vitesses moyennes du vent différentes. Les résultats ont été obtenus dans des conditions de vent stationnaire en amont des tas, pour la campagne dont les résultats sont donnés aux Fig.5a et 6a, qui illustrent respectivement la cartographie des concentrations en poussières dans le plan de mesure, en mg/m$^3$, et la cartographie des flux de poussières traversant une fenêtre de 20m x 15m, en mg/m$^2$ sec. La vitesse moyenne du vent pendant les mesures des Fig.5a et 6a était de 15m/s, soit 54Km/h.

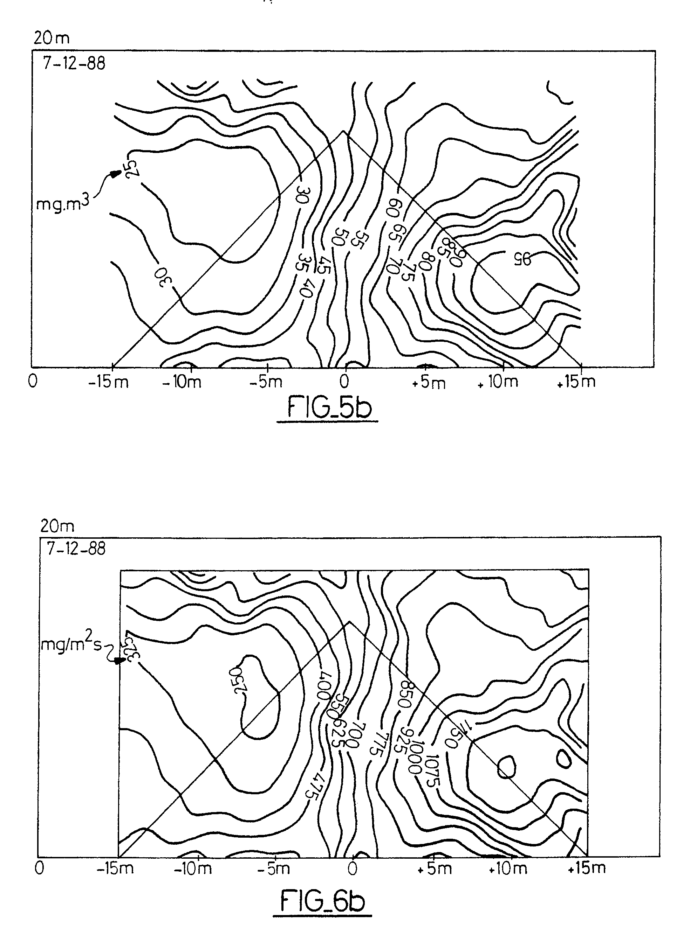

Par contre, les vents mesurés au cours de la seconde campagne, illustrée aux Fig.5b et 6b, n'étaient pas stationnaires. Dans ce cas la vitesse du vent considérée était d'une valeur moyenne de 71Km/h (19m/s), avec des rafales atteignant 100Km/h.

Les flux de poussières traversant le plan d'échantillonnage, représentés aux Fig.6a et 6b, ont été obtenus à partir des vitesses de vent relevées en chaque point de mesure P1, P2....

Après aspersion des tas de matériaux pulvérulents (charbon) par un produit polymérisable approprié formant une croute ou un film sur la surface du tas, de nouvelles quantifications des réenvols de poussières ont été effectuées, et leurs résultats, exposés dans le tableau ci-dessous, sont illustrés sur le diagramme de la Fig.7. Dans le tableau ci-dessous, la première ligne correspond aux cartographies des Fig.5a et 6a, et la seconde ligne aux cartographies des Fig.5b et 6b.

| Date | Vitesse du vent | Humidité de la croûte | Distance au tas | Flux calculé |
|---|---|---|---|---|
| | (m/s) | (%) | (m) | (kg/h) |
| 22.11.88 | 14,6 | 4,5 | 60 | 346 |
| 7.12.88 | 19,7 | 3,5 | 300 | 1372 |

Le diagramme de la Fig.7 montre en ordonnées les flux de poussières en Kg/h en fonction de la vitesse du vent (en Km/h). Certains points de mesure correspondent à des prélèvements sans aspersion, et les autres correspondent à des prélèvements après aspersion des tas, comme explicité par les mentions portées sur ce diagramme.

On voit que les envols de poussières sont considérablement réduits après aspersion.

En faisant l'hypothèse de tels épisodes durant toute une journée, l'émission de matériaux pulvérulents, au travers de la fenêtre de référence, serait, après arrosage des tas, respectivement de 8 tonnes par jour pour un vent de 50Km/h, et de 32 tonnes par jour pour un vent de 70Km/h pour un seul tas. Ainsi, pour une vitesse de vent de l'ordre de 50Km/h, le facteur d'émission d'un tas de charbon diminue après arrosage d'un facteur 3 à 8. De même, on a pu relever que pour un vent de l'ordre de 70Km/h, le facteur d'émission d'un tas traité par arrosage est du même ordre de grandeur que celui d'un tas non traité, soumis à un vent de 50Km/h.

## Revendications

1. Procédé pour mesurer la concentration dans l'atmosphère de poussières en suspension entraînées par le vent à partir d'aires de stockage de tas (24, 25) de matériaux pulvérulents, selon lequel, dans un plan (P) sensiblement perpendiculaire au vent dominant (V) et à une distance (d1) et une altitude appropriées par rapport au tas de matériau pulvérulent, on mesure la vitesse du vent, on effectue un prélèvement isocinétique d'un volume échantillon de l'air au moyen d'un capteur (2) d'une unité d'aspiration (2, 5) et on recueille les poussières prélevées sur des moyens (4) de filtrage et de stockage du capteur (2), caractérisé en ce que, on utilise un seul capteur et pour que le prélèvement soit isocinétique pendant toute sa durée, indépendamment des variations de vitesse du vent, on asservit le débit d'aspiration de l'unité d'aspiration à la vitesse mesurée du vent.

2. Procédé selon la revendication 1, caractérisé en ce qu'on effectue la mesure de la concentration de poussières à plusieurs altitudes différentes.

3. Dispositif pour la mise en oeuvre du procédé conforme à la revendication 1 ou 2, comprenant une chaîne de prélèvement équipée d'un moyen de mesure (1) de la vitesse (V) du vent, de moyens de captage d'un volume échantillon de l'air disposés au voisinage immédiat du moyen de mesure de la vitesse du vent et d'une unité d'aspiration (5) reliée aux moyens de captage, les moyens de captage comportant un organe de prélèvement (3) de l'air et un filtre (4) permettant de filtrer et de stocker les poussières du volume échantillon d'air prélevé, caractérisé en ce que l'unité d'aspiration est pourvue de moyens (9, 12) d'asservissement du débit de captation à la vitesse du vent mesurée par ledit moyen de mesure (1).

4. Dispositif selon la revendication 3, caractérisé en ce qu'il comprend un mat (15) de longueur variable et réglable, pourvu d'au moins une chaîne précitée, par exemple de trois, pouvant être positionnées à des hauteurs correspondantes.

5. Dispositif selon la revendication 4, caractérisé en ce que le mat (15) est télescopique, porte une chaîne de prélèvement (16a, 16b, 16c) à l'extrémité de chacun de ses tronçons (15a, 15b, 15c), et forme avec sa ou ses chaînes un équipage mobile monté sur un chariot (17).

6. Dispositif selon l'une des revendications 3 à 5, caractérisé en ce que des moyens d'asservissement (9, 12) sont associés à chaque unité d'aspiration (5).

7. Dispositif selon l'une des revendications 3 à 6, caractérisé en ce que le filtre (4) comporte un maillage adapté à la granulométrie des poussières.

5

FIG_1

FIG. 2

$16a\,(16b, 16c)$

FIG_3

FIG_4

F (kg/h)

7/12/88

22/11/88

km/h

FIG_7

9

FIG_5a

FIG_6a

20 m

7-12-88

mg.m³

FIG_5b

20m

7-12-88

mg/m²s

FIG_6b

**Office européen
des brevets**

# RAPPORT DE RECHERCHE
## EUROPEENNE

Numéro de la demande

**EP 90 40 2362**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (int. Cl.5) |
|---|---|---|---|
| X | US-A-4 159 635   (G.A. SEHMEL)<br>* Colonnes 1-3 *<br>– – – | 1-3 | G 01 N 1/24 |
| A | STAUB - REINHALTUNG DER LUFT, vol. 42, no. 1, janvier 1982, pages 6-10; S. RÖTHELE: "Verfahren zur geschwindigkeitsgleichen Absaugung mit Differenzdrucksonden"<br>* Pages 9-10 *<br>– – – | 1,3 | |
| A | US-A-4 135 092   (G.H. MILLY)<br>* Colonnes 7-8; figure 5 *<br>– – – | 2,5 | |
| A | US-A-4 257 746   (A.J. WELLS)<br>* Colonnes 2-4 *<br>– – – | 3 | |
| A | FR-A-2 591 338   (ELEC. DE FRANCE)<br>* Pages 7-10 *<br>– – – – – | 1 | |

| | DOMAINES TECHNIQUES RECHERCHES (int. Cl.5) |
|---|---|
| | G 01 N 1/24<br>G 01 N 1/22<br>G 01 N 15/06 |

Le présent rapport de recherche a été établi pour toutes les revendications

| Lieu de la recherche | Date d'achèvement de la recherche | Examinateur |
|---|---|---|
| La Haye | 11 décembre 90 | BOEHM CH.E.D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

& : membre de la même famille, document correspondant